# FASCICULE DE BREVET EUROPEEN

(11) **EP 0 658 070 B1**
(45) Date de publication et mention de la délivrance du brevet: **06.05.1998**
(21) Numéro de dépôt: 94402840.6
(22) Date de dépôt: 09.12.1994
(51) Int. Cl.: H05B 37/04, H02J 9/00

(54) **Module de contrôle pour bloc autonome d'éclairage de sécurité**
Prüfmodul für autonome Notbeleuchtungseinheit
Test module for self-contained emergency lighting unit

(30) Priorité: 10.12.1993 FR 9314851
(43) Date de publication de la demande: 14.06.1995
(73) Titulaire: LEGRAND, F-87045 Limoges Cédex (FR); LEGRAND SNC, F-87045 Limoges (FR)
(72) Inventeur: Guillon, Laurent, F-87350 Panazol (FR)
(74) Mandataire: CABINET BONNET-THIRION

(56) Documents cités:
- EP-A- 0 030 154
- EP-A- 0 191 579
- WO-A-92/04758
- FR-A- 2 616 929
- FR-A- 2 665 032
- GB-A- 2 258 571

## Description

La présente invention concerne d'une manière générale les blocs autonomes d'éclairage de sécurité, c'est-à-dire les luminaires dont il est usuel d'équiper certains locaux pour y maintenir un éclairage minimal en cas de défaillance de l'éclairage normal, notamment dans le cas d'une coupure du réseau d'alimentation de ce dernier.

Ainsi qu'on le sait, un tel bloc autonome d'éclairage de sécurité comporte usuellement une batterie d'accumulateurs, un dispositif de charge de cette batterie d'accumulateurs branché sur le réseau d'alimentation, et au moins une lampe de secours reliée aux bornes de la batterie d'accumulateurs par l'intermédiaire d'un interrupteur commandé piloté par un circuit de gestion qui, lorsque le réseau d'alimentation vient à être défaillant, ferme cet interrupteur commandé si, conjointement, la tension aux bornes de la batterie d'accumulateurs est supérieure à un seuil minimal donné.

La présente invention concerne plus particulièrement l'exécution des tests qu'il faut appliquer périodiquement à ces blocs autonomes d'éclairage de sécurité pour vérifier s'ils sont en état d'assurer leur fonction.

Ces tests doivent porter tant sur la ou les lampes de secours, pour contrôler qu'elles sont en bon état de fonctionnement, et il s'agit alors d'un test dit test de lampes à effectuer par exemple toutes les semaines, que sur la batterie d'accumulateurs, pour contrôler qu'elle est en mesure d'assurer pendant un temps donné l'alimentation de ces lampes de secours, et il s'agit alors d'un test dit test d'autonomie effectué par exemple à des temps largement plus espacés que les tests de lampes.

Dans le brevet français qui, déposé le 17 juillet 1990 sous le No 90 09083, a été publié sous le No 2 665 032, il a été proposé d'associer à chaque bloc autonome d'éclairage de sécurité un module de contrôle qui, sous la commande, par exemple, d'un coffret de télécommande permettant avantageusement de soumettre, à distance, à une intervention centralisée, sans coupure du réseau d'alimentation, une pluralité de tels blocs autonomes d'éclairage de sécurité, permet de soumettre aux tests désirés le bloc autonome d'éclairage de sécurité auquel il est associé.

En pratique, ce module de contrôle met en oeuvre un microprocesseur propre à la gestion des tests à effectuer.

Pour éviter, par sécurité, que deux blocs autonomes d'éclairage de sécurité voisins ne soient contrôlés en même temps, ce microprocesseur est à ce jour couplé à des moyens de codage, du genre roues codeuses par exemple, permettant d'affecter à chaque bloc autonome d'éclairage de sécurité une adresse donnée.

Il est ainsi possible d'intervenir à temps bien déterminés sur des blocs autonomes d'éclairage de sécurité regroupés sous la même adresse, et de décaler cette intervention d'un groupe à un autre.

Cette disposition donne satisfaction.

Mais elle a pour inconvénient d'imposer à l'installateur d'affecter un code à chaque bloc autonome d'éclairage de sécurité lors de sa pose.

La présente invention a d'une manière générale pour objet une disposition permettant d'éviter cet inconvénient.

De manière plus précise, elle a pour objet un module de contrôle pour bloc autonome d'éclairage de sécurité, du genre mettant en oeuvre un microprocesseur propre à la gestion de tests à effectuer périodiquement sur ce bloc autonome d'éclairage de sécurité, et caractérisé en ce que, le microprocesseur étant couplé à une base de temps spécifique au bloc autonome d'éclairage de sécurité concerné et comportant des moyens de comptage cycliques propres à délivrer une mesure de comptage à l'expiration de la constante de temps de cette base de temps, des dispositions sont prises, par construction, pour que le résultat de cette mesure de comptage soit aléatoire.

Ainsi, à partir d'un ordre extérieur d'initialisation de test, résultant par exemple de la mise sous tension de l'installation ou d'une action spécifique de l'installateur, le temps au bout duquel le test correspondant est dûment effectué varie systématiquement d'un bloc autonome d'éclairage de sécurité à l'autre, ce qui évite par le fait même, et comme recherché, que deux blocs autonomes d'éclairage de sécurité voisins ne soient intempestivement contrôlés en même temps.

En conséquence, l'ordre d'initialisation de test peut dès lors avantageusement être déclenché pour l'ensemble des blocs autonomes d'éclairage de sécurité concernés.

Dans la demande de brevet internationale No WO-A-92 04758, il est prévu une centrale de test communiquant par radio avec des blocs autonomes d'éclairage de sécurité à contrôler, ceux-ci ont une adresse propre et préprogrammée, et les divers composants nécessaires sont situés dans la centrale de test elle-même.

Dans la demande de brevet européen No EP-A-0 191 579, une centrale de test assure, à date fixe, programmée initialement par l'utilisateur, la gestion des tests à effectuer.

Aucun de ces documents ne suggère de rendre aléatoire le résultat d'une mesure de comptage dont dépend, pour chacun des blocs autonomes d'éclairage de sécurité à contrôler, après un ordre d'initialisation de test commun à l'ensemble de ceux-ci, l'exécution effective de ce test.

Il en est de même dans la demande de brevet français No 2 616 929, dans laquelle la tolérance des composants mis en oeuvre affecte éventuellement la durée du test, et non pas le début de celui-ci.

Tel est au contraire l'effet de la disposition suivant l'invention.

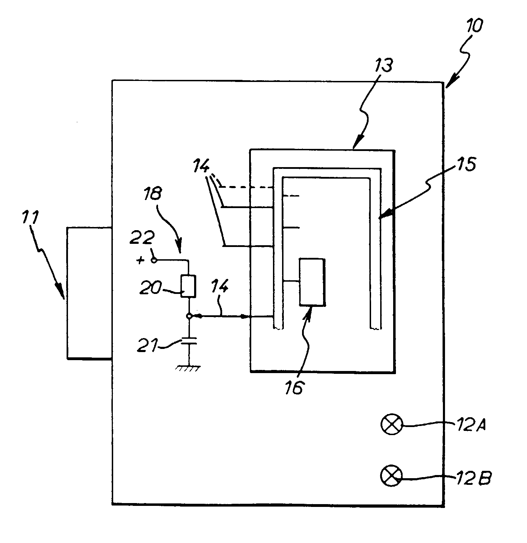

Les caractéristiques et avantages de l'invention ressortiront d'ailleurs de la description qui va suivre, à titre d'exemple, en référence au dessin schématique annexé dont la figure unique est un bloc diagramme d'un module de contrôle suivant l'invention.

Tel qu'illustré sur cette figure, et de manière connue en soi, le module de contrôle 10 suivant l'invention comporte, extérieurement, une fiche 11 propre à son embrochage sur le bloc autonome d'éclairage de sécurité auquel il est associé.

C'est donc par l'intermédiaire de ce bloc autonome d'éclairage de sécurité, non représenté, que se font son alimentation et sa commande, à partir d'un coffret de télécommande, également non représenté, suivant par exemple des dispositions du type de celles schématisées dans le brevet français No 90 09083 mentionné ci-dessus.

De manière également connue en soi, le module de contrôle 10 suivant l'invention comporte en outre, extérieurement, deux voyants d'affichage 12A, 12B permettant de mémoriser, en les visualisant, les tests effectués.

Par exemple, ces deux voyants d'affichage 12A, 12B peuvent être constitués conjointement par une simple LED bicolore, c'est-à-dire par une simple diode électroluminescente apte à prendre l'une ou l'autre de deux couleurs, par exemple jaune ou verte.

De manière connue en soi, enfin, le module de contrôle 10 suivant l'invention comporte, intérieurement, un microprocesseur 13 propre à la gestion de tests à effectuer périodiquement sur le bloc autonome d'éclairage de sécurité concerné.

Par exemple, et tel que schématisé sur la figure, ce microprocesseur comporte une pluralité de ports d'entrée et/ou de sortie 14 qui, par l'intermédiaire par exemple de l'équivalent d'une barre bus 15, permettent la desserte d'une pluralité de composants divers et, parmi ceux-ci, celle de moyens de comptage cycliques 16 propres à délivrer une mesure de comptage à l'expiration d'un temps donné.

Suivant l'invention, le microprocesseur 13 est couplé à une base de temps 18 spécifique au bloc autonome d'éclairage de sécurité concerné, et c'est à l'expiration de la constante de temps de cette base de temps 18 que les moyens de comptage cycliques 16 délivrent une mesure de comptage.

Des dispositions sont prises, par construction, pour que le résultat de cette mesure de comptage soit aléatoire, et c'est en cela que la base de temps 18 équipant au hasard le module de contrôle 10 destiné à être associé à un quelconque bloc autonome d'éclairage de sécurité peut être considérée comme spécifique à celui-ci.

En particulier, la constante de temps de la base de temps 18 est choisie plus de deux cents fois supérieure à la durée d'un cycle des moyens de comptage 16, et, préférentiellement, au moins cinq cents fois supérieure à cette durée.

Par exemple, la durée d'un cycle des moyens de comptage cycliques 16 peut être de l'ordre de 10 microsecondes, tandis que la constante de temps de la base de temps 18 peut être de l'ordre de 3,5 millisecondes.

Préférentiellement, également, avant de délivrer une mesure de comptage, les moyens de comptage cycliques 16 sont relancés au moins une fois, ce qui accentue d'autant le caractère aléatoire du résultat de cette mesure de comptage.

Par exemple, les moyens de comptage cycliques 16 sont ainsi relancés deux fois pour un test de lampes et trois fois pour un test d'autonomie.

Pour un test de lampes, le résultat de la mesure de comptage correspondante est ramené à un nombre modulo 7, et, pour un test d'autonomie, le résultat de la mesure de comptage est ramené à un nombre modulo 10.

Ainsi, il est bien pratiqué systématiquement un test de lampes toutes les semaines et un test d'autonomie toutes les dix semaines.

Par exemple, et tel que représenté, la base 18 comporte un circuit RC, en se réduisant en pratique à un tel circuit.

Elle est donc simplement constituée par une résistance 20 en série avec une capacité 21 aux bornes d'une source de courant continu 22.

Préférentiellement, le port 14 du microprocesseur 13 sur lequel est branchée la base de temps 18 fait entrée-sortie.

Initialement, ce port 14 fonctionne en sortie et fixe donc un bit 0.

A réception d'un ordre d'initialisation de test, il fonctionne au contraire en entrée.

Dans ces conditions, la capacité 21 se charge à travers la résistance 20, et dès que le port 14 voit un bit 1, ce qui correspond à une tension d'au moins 0,7 fois la tension d'alimentation du microprocesseur 13, les moyens de comptage cycliques 16, qui ont commencé à compter à réception de l'ordre d'initialisation de test, sont arrêtés.

Pour accentuer le caractère aléatoire de la mesure de comptage correspondante, la capacité 21 relève préférentiellement d'une fabrication à dispersion relativement large.

De bons résultats sont déjà obtenus lorsque cette dispersion va au moins de -5% à +5%.

Mais il est préférable d'aller par exemple jusqu'à une dispersion allant de -20% à +80%.

La résistance 20 peut d'ailleurs elle aussi relever d'une fabrication à dispersion relativement large.

Pour accentuer, également, le caractère aléatoire de la mesure de comptage, la capacité 21 est préférentiellement choisie pour avoir une tenue en température relativement médiocre.

En conséquence, le passage d'un bit 0 à un bit 1 est relativement incertain.

Bien entendu, la présente invention ne se limite pas à la forme de réalisation décrite et représentée, mais englobe toute variante d'exécution.

En particulier, la résistance 20 peut être intégrée au microprocesseur 13.

## Revendications

1. Module de contrôle pour bloc autonome d'éclairage de sécurité, du genre mettant en oeuvre un microprocesseur (13) propre à la gestion de tests à effectuer périodiquement sur le bloc autonome d'éclairage de sécurité, caractérisé en ce que, le microprocesseur (13) étant couplé à une base de temps (18) spécifique au bloc autonome d'éclairage de sécurité concerné et comportant des moyens de comptage cycliques (16) propres à délivrer une mesure de comptage à l'expiration de la constante de temps de cette base de temps (18), des dispositions sont prises, par construction, pour que le résultat de cette mesure de comptage soit aléatoire.

2. Module de contrôle suivant la revendication 1, caractérisé en ce que la constante de temps de la base de temps (18) est plus de deux cents fois supérieure à la durée d'un cycle de moyens de comptage cycliques (16).

3. Module de contrôle suivant la revendication 2, caractérisé en ce que la constante de temps de la base de temps (18) est au moins cinq cents fois supérieure à la durée d'un cycle des moyens de comptage cycliques (16).

4. Module de contrôle suivant l'une quelconque des revendications 1 à 3, caractérisé en ce que, avant de délivrer une mesure de comptage, les moyens de comptage cycliques (16) sont relancés au moins une fois.

5. Module de contrôle suivant l'une quelconque des revendications 1 à 4, caractérisé en ce que la base de temps comporte un circuit RC.

6. Module de contrôle suivant la revendication 5, caractérisé en ce que la capacité (21) que comporte la base de temps (18) relève d'une fabrication à dispersion relativement large.

7. Module de contrôle suivant la revendication 6, caractérisé en ce que la capacité (21) que comporte la base de temps (18) relève d'une fabrication à dispersion allant au moins de -5% à +5%.

8. Module de contrôle suivant la revendication 7, caractérisé en ce que la capacité que comporte la base de temps (18) relève d'une fabrication à dispersion allant de -20% à +80%.

9. Module de contrôle suivant l'une quelconque des revendications 5 à 7, caractérisé en ce que la résistance (20) que comporte la base de temps (18) relève d'une fabrication à dispersion relativement large.

10. Module de contrôle suivant l'une quelconque des revendications 5 à 9, caractérisé en ce que la capacité (21) que comporte la base de temps (18) a une tenue en température relativement médiocre.

11. Module de contrôle suivant l'une quelconque des revendications 1 à 10, caractérisé en ce que la base de temps (18) est branchée sur un port (14) du microprocesseur (13) faisant entrée-sortie.

## Patentansprüche

1. Prüfmodul für autonome Notbeleuchtungseinheit von der Sorte, die einen Mikroprozessor (13) verwendet, der zur Verwaltung von periodisch mit der autonomen Notbeleuchtungseinheit vorzunehmenden Tests geeignet ist,
dadurch **gekennzeichnet,**
daß der Mikroprozessor (13) mit einem Zeitglied (18) gekoppelt ist, das für die betreffende autonome Notbeleuchtungseinheit spezifisch ist, und zyklische Zählmittel (16) umfaßt, die geeignet sind, beim Ablauf der Zeitkonstante dieses Zeitglieds (18) ein Zählmaß zu liefern, wobei konstruktive Maßnahmen ergriffen sind, damit das Ergebnis dieses Zählmaßes zufällig wird.

2. Prüfmodul nach Anspruch 1,
dadurch **gekennzeichnet,**
daß die Zeitkonstante des Zeitglieds (18) mehr als zweihundert mal größer als die Dauer eines Zyklus der zyklischen Zählmittel (16) ist.

3. Prüfmodul nach Anspruch 2,
dadurch **gekennzeichnet ,**
daß die Zeitkonstante des Zeitglieds (18) mindestens fünfhundert mal größer als die Dauer eines Zyklus der zyklischen Zählmittel (16) ist.

4. Prüfmodul nach einem der Ansprüche 1 bis 3,
dadurch **gekennzeichnet,**
daß vor dem Liefern eines Zählmaßes die zyklischen Zählmittel (16) mindestens einmal wieder in Gang gesetzt werden.

5. Prüfmodul nach einem der Ansprüche 1 bis 4,
dadurch **gekennzeichnet,**
daß das Zeitglied einen RC-Kreis umfaßt.

6. Prüfmodul nach Anspruch 5,
dadurch **gekennzeichnet,**
daß der Kondensator (21), den das Zeitglied (18) umfaßt, aus einer Herstellung mit einer relativ großen Streuung stammt.

7. Prüfmodul nach Anspruch 6,
dadurch **gekennzeichnet,**
daß der Kondensator (21), den das Zeitglied (18) umfaßt, aus einer Herstellung mit einer Streuung stammt, die zwischen mindestens -5% bis +5% liegt.

8. Prüfmodul nach Anspruch 7,
dadurch **gekennzeichnet,**
daß der Kondensator, den das Zeitglied (18) umfaßt, aus einer Herstellung mit einer Streuung stammt, die zwischen -20% bis +80% liegt.

9. Prüfmodul nach einem der Ansprüche 5 bis 7,
dadurch **gekennzeichnet,**
daß der Widerstand (20), den das Zeitglied (18) umfaßt, aus einer Herstellung mit einer relativ großen Streuung stammt.

10. Prüfmodul nach einem der Ansprüche 5 bis 9,
dadurch **gekennzeichnet,**
daß der Kondensator (21), den das Zeitglied (18) umfaßt, ein relativ mittelmäßiges Temperaturverhalten aufweist.

11. Prüfmodul nach einem der Ansprüche 1 bis 10,
dadurch **gekennzeichnet,**
daß das Zeitglied (18) an einem Tor (14) des Mikroprozessors (13) abgezweigt ist, das einen Eingang-Ausgang bildet.

## Claims

1. A checking module for an autonomous emergency lighting unit of the type using a microprocessor (13) for conducting tests to be periodically effected on the autonomous emergency lighting unit, characterised in that, the microprocessor (13) being coupled to a time base (18) specific to the autonomous emergency lighting unit in question and comprising cyclic counting means (16) for delivering a counting measurement at the expiry of the time constant of said time base (18), arrangements are made by virtue of design for the result of said counting measurement to be random.

2. A checking module according to claim 1 characterised in that the time constant of the time base (18) is more than two hundred times greater than the duration of a cycle of the cyclic counting means (16).

3. A checking module according to claim 2 characterised in that the time constant of the time base (18) is at least five hundred times greater than the duration of a cycle of the cyclic counting means (16).

4. A checking module according to any one of claims 1 to 3 characterised in that, before delivering a counting measurement, the cyclic counting means (16) are restarted at least once.

5. A checking module according to any one of claims 1 to 4 characterised in that the time base comprises an RC circuit.

6. A checking module according to claim 5 characterised in that the capacitor (21) that the time base (18) comprises comes from a production involving a relatively wide degree of dispersion.

7. A checking module according to claim 6 characterised in that the capacitor (21) that the time base (18) comprises comes from a production involving a degree of dispersion ranging at least from -5% to +5%.

8. A checking module according to claim 7 characterised in that the capacitor that the time base (18) comprises comes from a production involving a degree of dispersion ranging from -20% to +80%.

9. A checking module according to any one of claims 5 to 7 characterised in that the resistor (20) that the time base (18) comprises comes from a production involving a relatively wide degree of dispersion.

10. A checking module according to any one of claims 5 to 9 characterised in that the capacitor (21) that the time base (18) comprises has a relatively poor temperature characteristic.

11. A checking module according to any one of claims 1 to 10 characterised in that the time base (18) is connected to an input-output port (14) of the microprocessor (13).
